# EUROPEAN PATENT APPLICATION

(11) **EP 1 291 819 A2**
(43) Date of publication of application: **12.03.2003**
(21) Application number: 02256077.5
(22) Date of filing: 02.09.2002
(51) Int. Cl.: G06T 1/00

(54) **Digital watermark embeddig**

(30) Priority: 03.09.2001 JP 2001266435; 07.08.2002 JP 2002230326
(71) Applicant: CANON KABUSHIKI KAISHA, Tokyo (JP)
(72) Inventor: Kaneda, Kitahiro, Ohta-ku, Tokyo (JP)
(74) Representative: Beresford, Keith Denis Lewis

(57) **Abstract**

An original (a piece of paper or electronic data) is input to an input unit 2 and imaged, and simultaneously identification area specific to the original is identified (S200). Then document identification information to be embedded is extracted from the identification area of the imaged original that has been identified at S200 (S202). The information extracted at S202 is converted to a digital signature (S204). The information converted to a digital signature at S204 is embedded to the imaged original as a digital watermark (S206). The image of the document that has been embedded with the information at S206 is output to a digital watermark extracting device via an output unit 14 (S208).

## Description

### FIELD OF THE INVENTION

The invention relates to an image processing device for embedding a digital watermark into an original image, an image processing device for extracting a digital watermark from an original image embedded with the digital watermark, an image processing method, a program, and a storage medium.

### BACKGROUND OF THE INVENTION

In recent years, digital image forming devices such as printers and copiers have provided significantly improved image quality and we can easily obtain printed material of high quality. That is, anybody now can get desired prints without difficulty using image processing by high-performance scanners, printers, copiers, or computers. It caused, however, problems like unauthorized copy or tampering of documents, which has led to today's active research and development of so-called digital watermarking for printing. By using the watermarking, access control information is embeded into print data itself so that the occurrence of such problems may be prevented or inhibited.

Techniques for digital watermark for printing may include the followings: embedding access control information invisibly into print data, namely printed images; embedding bitmap pattern corresponding to access control information into the margin of document images; or applying scramble encryption to a document image itself.

In general, what is called invisible type that embeds information invisibly can embed less amount of information but has stronger resistance against tampering and the like. By contrast, what is called visible type that attaches special bitmaps onto a margin has opposite characteristics of invisible type. While both of these types can be applied to printed material, the scramble encrypting of a document image itself is not applicable to printed material itself.

Meanwhile, a growing number of various commercial transactions involving payments over the Internet are performed nowadays and techniques that embed information for authenticating one's identity into electronic data using digital signature and public key encryption are getting widely available.

Application of these techniques, that is, converting information specific to a document to a digital signature and embedding it to a watermark is under consideration as a new way for improving the security of printed material.

However, if a digital signature and a digital watermark are simultaneously applied to printed material, when large amount of digital signature data is embedded, a digital watermark of visible type has to be used and thus results in weaker resistance against tampering and the like, and when a digital watermark of invisible type is in turn applied, resistance can be stronger but data amount that can be embedded is limited.

Typically, digital signature data to be embedded in an above-mentioned situation may include various items such as ID, amount of money, name, or date of birth as identification information, and, in view of the limitations as above, it has been almost infeasible to apply digital signature to printed material in a practical way.

The invention is made in view of such problems and has a primary object of, even when a large amount of document and symbol string identification information has to be embedded, allowing them to be embedded reliably as an invisible digital watermark into an image.

### SUMMARY OF THE INVENTION

In order to achieve the object of the present invention, for example, an image processing apparatus for embedding a digital watermark to an original image, comprises extraction means for extracting document identification information from the original image; and transformation means for transforming the document identification information extracted by the extraction means based on a predetermined transformation algorithm that generates a unique transformation result from the information, wherein data obtained by the transformation means is embedded as a digital watermark into the original image.

In order to achieve the object of the present invention, for example, an image processing apparatus, comprises input means for inputting an original image in which document identification information that should exist in the original image is embedded as a digital watermark after it has been transformed based on a predetermined transformation algorithm which generates a unique transformation result from the information; first extraction means for extracting document identification information from the original image; second extraction means for extracting data that is embedded as a digital watermark in the original image; transformation means for transforming the document identification information extracted by the first extraction means based on the predetermined transformation algorithm; and detection means for detecting the reliability of document identification information extracted by the first extraction means, using data obtained by the transformation means and data obtained by the second extraction means.

In order to achieve the object of the present invention, for example, an image processing method for embedding a digital watermark into an original image, comprises an extraction step of extracting document identification information from the original image; and a transformation step of transforming the document identification information extracted at the extraction step, based on a predetermined transformation algorithm that generates a unique transformation result from the information, wherein data obtained at the transformation step is embedded as a digital watermark into the original image.

In order to achieve the object of the present invention, for example, an image processing method, comprises an input step of inputting an original image in which document identification information that should exist in the original image is embedded as a digital watermark after it has been transformed based on a predetermined transformation algorithm which generates a unique transformation result from the information; a first extraction step of extracting document identification information from the original image; a second extraction step of extracting data which has been embedded as a digital watermark in the original image; a transformation step of transforming the document identification information extracted at the first extraction step based on the predetermined transformation algorithm; and a detection step of detecting the reliability of document identification information extracted at the first extraction step, using data obtained at the transformation step and data obtained at the second extraction step.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principle of the invention.
FIG. 1 is a block diagram showing the basic configuration of a digital watermark embedding device of the First Embodiment of the invention;
FIG. 2 is a block diagram showing the basic configuration of a digital watermark extracting device of the First Embodiment of the invention;
FIG. 3 is a flow chart illustrating the embedding a digital watermark;
FIG. 4 is a flow chart illustrating the extracting a digital watermark;
FIG. 5 is a detailed flow chart illustrating the extracting of document identification information from an inputted original; and
FIG. 6 is a flow chart illustrating the conversion to a digital signature.

### DETAILED DESCRIPTION OF THE PREFERRED EMBODIMENTS

Preferred embodiments of the invention will now be described in detail in accordance with the accompanying drawings.

### [First Embodiment]

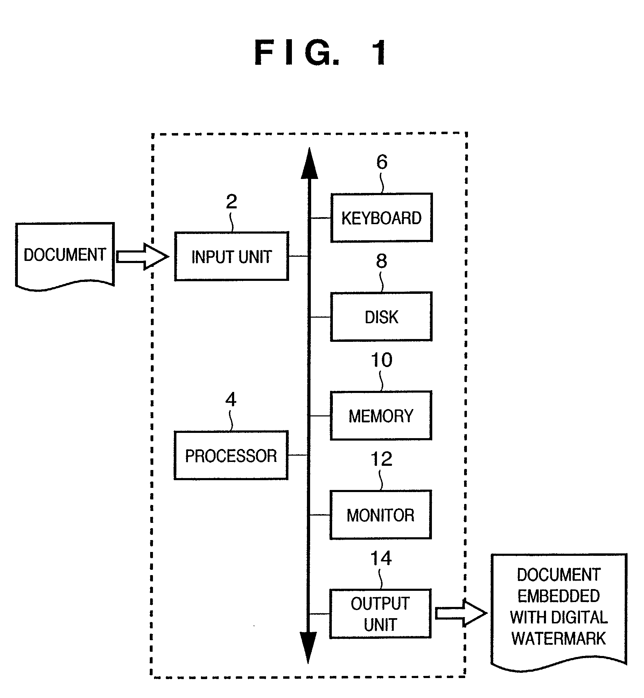

FIG. 1 is a block diagram showing the basic configuration of a digital watermark embedding device of the embodiment. In the figure, 2 is an input unit consisting of a scanner and a camera for inputting a document to be embedded with a digital watermark, a network for inputting the image of a document to be embedded with a digital watermark, and a file reading device and it rasterizes electronic document data such as text data or vector data. 4 is a processor performing various kinds of processing; 6 is a keyboard for inputting instructions for the processor 4; 8 is a disk for storing document images that have been read; 10 is memory for temporarily storing various data for processing made at the processor 4 or accumulating document images that are read by the input unit 2; 12 is a monitor for showing instruction inputs for the processor 4 or state of processing; and 14 is an output unit such as a printer or network for outputting document images embedded with digital signature information.

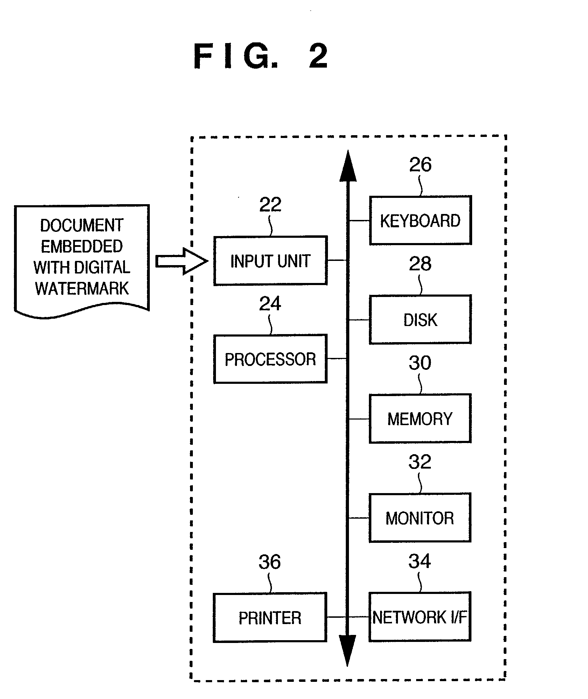

FIG. 2 is a block diagram showing the basic configuration of a digital watermark extracting device that extracts (reads) a digital watermark from image data of a document embedded with a digital watermark by the digital watermark embedding device in FIG. 1. Although the embodiment addresses digital watermark embedding device and extracting device as separate devices, the invention is not limited to this form and can be used as separate portions (digital watermark embedding portion and extracting portion) within a single machine.

In FIG. 2, 22 is an input unit consisting of a scanner and a camera for inputting a document embedded with a digital watermark, a network for inputting a document image embedded with a digital watermark, and a file reading device and it rasterizes text data and vector data. 24 is a processor performing various kinds of processing; 26 is a keyboard for inputting instructions for the processor 24; 28 is a disk for saving read document images, or to be searched for the original file of read documents; 30 is memory for temporarily storing data for various types of processing made by the processor 24 or accumulating document images read by the input unit 22; 32 is a monitor showing instruction inputs for the processor 24 and state of processing; and 34 and 36 are a network interface and a printer, respectively, for inputting/outputting document images.

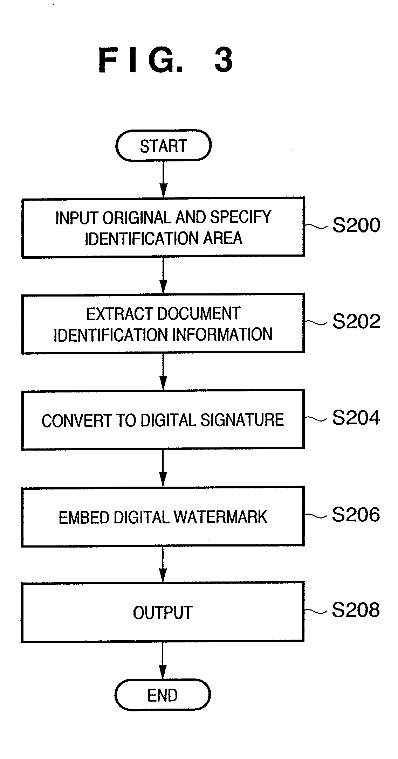

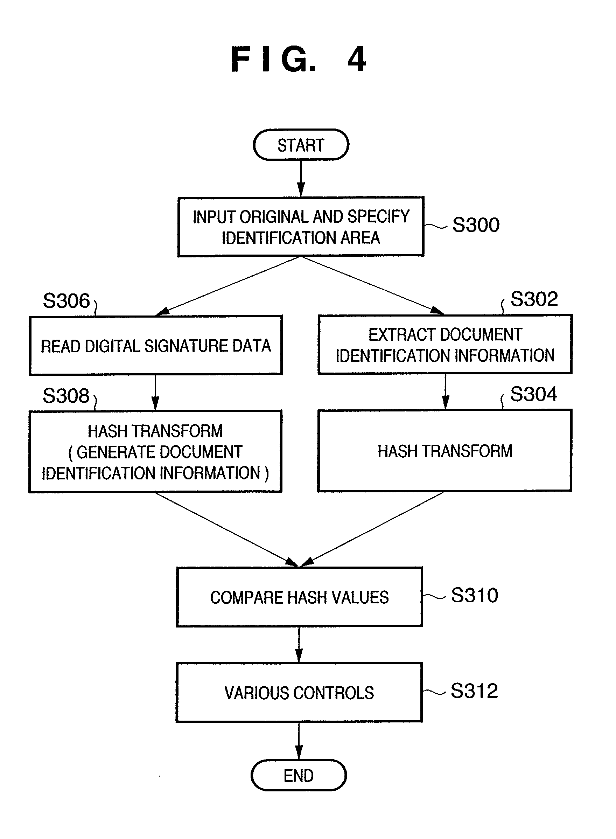

Now, the embedding and extracting of a digital watermark according to the embodiment will be described using FIGS. 3 and 4. FIG. 3 is a flow chart of embedding a digital watermark and FIG. 4 is a flow chart of extracting a digital watermark.

The embedding of a digital watermark will be first described. At step S200, an original (a piece of paper or electronic data) is input to the input unit 2 and imaged, and at the same time identification area specific to the original is input.

The original herein refers to forms which are filled or created by human in order to communicate some kind of information to a third party. More specifically, it is negotiable instrument such as receipt, account transfer request form, or insurance application form that is of such a kind that tampering with information filled in it could be disadvantageous to its creator.

The identification area specific to an original means an area in which document identification information (character or symbol strings) to be embedded, which will be described for step S202, is filled. And inputting of the identification area refers to inputting location or size information for portions that might be tampered with (i.e. the portion which contains document identification information, differing for each form) directly using the keyboard 6, or inputting a template which stores such information.

Also, it is possible to store the information about the location of identification area and, if it is known, its size within the image of an original onto the disk 8 as a template in advance and read it as required.

At step S202, document identification information (character and symbol strings like ID, amount of money, address, name, or birth date) to be embedded is extracted from the identification area of the original that has been imaged at step S200. The extraction can be carried out with a known character recognition (what is called OCR) technique.

At step S204, the information extracted at step S202 is converted to a digital signature if required (as will be described in detail later).

The conversion to a digital signature is not essential in the invention, which is a process for further enhancing the reliability of information embedded as a digital watermark. Accordingly, the conversion to a digital signature can be omitted (i.e. step S204 can be removed from the procedure).

At step S206, the information converted to a digital signature (digital signature data) at step S204 is embedded as a digital watermark into the imaged original (as will be described in detail later). At step S208, the document image which have been embedded with a watermark at step S206 is output to a digital watermark extracting device via the output unit 14. However, the invention is not limited to this form; the document image may be saved in the disk 8.

The extracting of a digital watermark will be now described. At step S300, an original (a piece of paper or electronic data) is input and imaged, and simultaneously identification area specific to the original is input. Inputting the identification area refers to inputting location or size information for portions that might be tampered with (i.e. the portion which contains document identification information, differing for each form) directly using the keyboard 26, or inputting a template which stores such information.

Alternatively, if the location and size of identification area within the image of an original are known in advance, it is possible to store this information in the disk 28 as a template and read it as appropriate.

In the embodiment, the original which has been created by the digital watermark embedding device performing the above processing (i.e. the processing according to the flow chart in FIG. 3) is input to the digital watermark extracting device.

At step S302, the document identification information to be read (character and symbol strings such as ID, amount of money, address, name, birth date) is extracted from the identification area in the original document that has been imaged at step S300. The known OCR technique is applied to this extraction as in the embedding of information. At step S304, the document identification information extracted at step S302 is transformed to a hash value (hash-transformed) (details will be described later). At step S306, digital signature data embedded as a digital watermark is read from the original that has been imaged at step S300 (details will be described later).

Here, if conversion to a digital signature is not performed when embedding information as described above, the data read at step S300 is a precise hash value as it was just after the hash transformation at the time of its embedding. In that case, the step S308 to be mentioned below does not exist.

At step S308, data as just prior to the conversion to a digital signature, that is, the hash value immediately after the hash transformation at the time of embedding is restored from the digital signature data read at step S306 (details will be described later). At step S310, the hash value generated at step S304 is compared with the one generated at step S308. Specifically, in the embodiment it is determined if the two hash values are the same or not. At step S312, various controls are performed according to the result of comparison at step S310. These controls include informing the result of tampering detection externally and the like, for example it is possible to display the result on the monitor 32 or to print the result on a piece of paper through the printer 36. At step S312, if the two values are the same, it is informed externally that no tampering has been made, and if the values are different, it is informed externally that some kind of tampering has been made.

The embedding of a digital watermark (step S206) and extracting of a digital watermark (step S306) may be carried out with any technique as long as they are invisible digital watermarks.

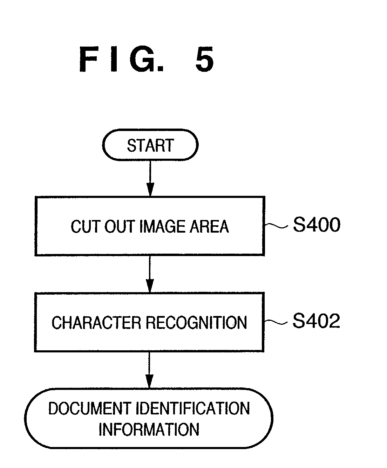

Now, the extraction of document identification information from an inputted original (steps S202 and S302) will be described. A detailed flow chart for this processing is shown in FIG. 5.

At step S400, an image area is cut out from the document image inputted at step S200 and S300 based on the inputted identification area. And step S402 is a routine for applying character recognition to an image within the area cut out at step S400. At this point, if multiple areas should be subjected to character recognition, multiple times of character recognition are performed, and if the target characters are of different kinds, an optimal character recognition process for each kind is selected to retrieve character and symbol strings. The character and symbol strings thus obtained become document identification information.

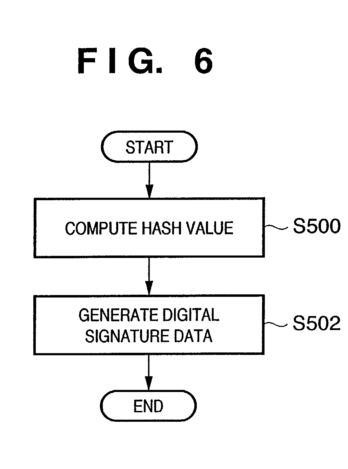

The conversion to digital signature (step S204) will be now described. FIG. 6 shows a detailed flow chart of the conversion to digital signature. At step S500, a hash value of the document identification information extracted at step S202 is computed. A hash value will be described below. Step S502 is a routine of generating digital signature data described below from the hash value derived at step S500 using a secret key of the signature creator.

The processing of restoring document identification information as immediately after hash transformation from digital signature data (step S308) uses a secret key of the signature creator as at step S502 to restore original information as prior to its conversion to a digital signature, namely a hash value, from signature data.

A hash value will be described in the following. A hash value is an output value of a hash function h that is 1-variable function, and a hash function refers to a transformation function that makes it difficult for transformation results from different pieces of original data to clash with each other. Here, clash means that different input values x1 and x2 will produce the result; h(x1) = h(x2). This transformation function is also a function that transforms a bit string of a given length into a bit string of a fixed length. Thus a hash function is a function that transforms a bit string of any length to a bit string of a certain length and makes it very difficult to find x1 and x2 that satisfy h(x1) = h(x2). Typical hash functions include MD5 (Message Digest 5), SHA (Secure Hash Algorithm) and so on.

Digital signature data will be described in the following. Encryption using public key cryptography may be used for the creation of signature data (conversion to a digital signature), however, the embodiment does not specify any method. In the following, signature system by means of public key cryptography will be described in brief.

Public key cryptography is a cryptography in which an encryption key and a decryption key are different and an encryption key is made public and a decryption key is kept secret.

When it is supposed that, for a message M, E(kp, M) denotes an encrypting operation with a public encryption key kp and D(ks, M) denotes a decrypting operation with a secret decryption key ks, the public key encryption algorithm meets the following three conditions.
(1) When kp is given, E(kp, M) can be easily computed. When ks is given, D(ks, M) can be easily computed.
(2) If one does not know ks, it is difficult to determine M in terms of computational complexity even if he/she knows how kp and E were computed and that C = E(kp, M).
(3) E(kp, M) can be defined and D(ks, E(kp, M)) = M holds for all messages (plaintext) M.

That a user P has made his/her signature for a document M, namely, that a document M indeed has been created by P using public key cryptography that meets the conditions above, can be proved as follows.

P generates a cipher text S = D(ks, M) with his/her own secret key ks and sends it along with M.

V performs restoring transformation M' = E(kpA, S) of S with P's public key kp and check if M' matches the document M. This operation by V is called the verification of a signature.

Since encryption with public key encryption generally has a disadvantage that it takes time, in most cases data is transformed with a hash function before it is converted to a digital signature, rather than applying the above operations to a document M itself, and the invention also adopts the former method.

As has been discussed, according to the image processing device and method of the embodiment, it is possible to apply invisible digital watermarks even when there is large amount of document identification information, by extracting document identification information in an image with character recognition, converting the document identification information using a transformation algorithm such as hash transformation that generates a unique transformation result from original information, and after encrypting it with a digital signature as required, embedding it as a digital watermark in the image.

And it is possible to check the reliability of document identification information that normally exist in an image, that is, whether the information has been tampered with or not, based both on the converted data from document identification information that is embedded as a digital watermark and the document identification information that can be derived directly from the image employing character recognition, of an image embedded with a digital watermark.

Although the foregoing description has described the hash transformation as an example of a transformation algorithm that generates a unique transformation result from document identification information, the object of the invention can also be attained by applying any of other known transformations similar to hash transformation to this embodiment.

The transformation is not limited only to transformation functions, but well-known compression techniques for character and symbol strings are also applicable.

For instance, the object of the invention may be also attained by, after performing lossless compression (transformation) of the document identification information by means of compression technique for character and symbol strings known as LZW or ZIP instead of hash transformation, performing conversion to a digital signature as well if required and embedding the result as a digital watermark, for embedding the document identification information as a digital watermark.

In that case, tampering detection part (digital watermark extracting part) obtains compressed data as it has been immediately after the lossless compression at embedding part, by decoding the data that has been converted to a digital signature (encrypted) into data as prior to the conversion in the case embedding part utilizes digital signature, and obtains character strings as just prior to the lossless compression, namely document identification information, by decompressing the compressed data. In parallel with this, document identification information is also derived from the original image by means of character recognition (OCR). And each piece of document identification information can be compared with each other to detect any tampering. In this case, this variation compares data in a different phase than the First Embodiment (i.e. while the First Embodiment compares data as after (hash) transformation of document identification information, this variation compares document identification information), however, both are configured to be able to handle large amount of digital signature data to be embedded as a digital watermark.

### [Second Embodiment]

Although the First Embodiment inputs location information or size information as means for specifying identification area specific to an original directly with the keyboard 6 or inputs a template storing such information, the invention is not limited to this and identification area may be input using the following means.

That is, individual character (symbol) string area is determined in parallel with the inputting of an original. This process determines a rectangle circumscribing each character (symbol) with a known technique, then groups rectangles within a certain distance together to make grouped rectangles one rectangle, and determines the area of the rectangle as the character (symbol) string area. Then the determined character (symbol) string area is input as identification information.

On the other, for example, using form recognition technology for inputting document and recognizing automatically the document simultaneously, means for input template may be used without man power.

### [Third Embodiment]

Although the First Embodiment does not specify the location for embedding a digital watermark for document identification information, the location may be set to the same area as document identification information, or the location may be specified using a template that pre-sets a particular embedding location, for example.

### [Other Embodiments]

Furthermore, the invention is not limited only to the device and method for realizing the embodiments above, but a case also falls within the scope of the invention where a program code for software to realize the embodiments above is provided to a computer (CPU or MPU) in a system or device, and the computer of the system or device causes the various devices to operate in accordance with the program code so that the embodiments can be realized.

In this case, the program code itself for software will realize the features of the embodiments, thus the program code itself and the means for supplying the code to a computer, specifically, a storage medium with the program code stored on it, are included within the scope of the invention.

The storage medium for storing such a program code may include floppy® disk, hard disk, optical disk, magneto-optical disk, CD-ROM, magnetic tape, nonvolatile memory card, ROM and so on.

In addition, such a program code is included within the scope of the invention not only in the case where a computer controls various devices only in accordance with supplied program code to realize the features of the embodiments, but also in the case where the program code realizes the embodiments in conjunction with an OS (operating system) or other application software running on a computer.

Also, a case is included within the scope of the invention where after the supplied program code has been stored in memory provided on a feature expansion board of a computer or a feature expansion unit connected to a computer, the CPU or the like on the feature expansion board or unit executes some or all of the actual processing based on the designation of the code to realize the embodiments.

As has been described, it is possible to reliably embed invisible digital watermark into an original even when there is a large amount of document identification information to be embedded according to the invention.

As many apparently widely different embodiments of the present invention can be made without departing from the spirit and scope thereof, it is to be understood that the invention is not limited to the specific embodiments thereof except as defined in the claims.

## Claims

1. An image processing apparatus for embedding a digital watermark to an original image, comprising:
extraction means for extracting document identification information from said original image; and
transformation means for transforming said document identification information extracted by said extraction means based on a predetermined transformation algorithm that generates a unique transformation result from the information,
wherein data obtained by said transformation means is embedded as a digital watermark into said original image.

2. The image processing apparatus according to claim 1, wherein said predetermined transformation algorithm is hash transformation.

3. The image processing apparatus according to claim 1, wherein said predetermined transformation algorithm is lossless compression.

4. The image processing apparatus according to any one of claims 1 to 3, further comprising area identification means for identifying the area of said document identification information within said wherein said extraction means extracts character strings within an image as said document identification information by applying character recognition to the image within the area that has been identified by said area identification means.

5. The image processing apparatus according to claim 4, wherein said character recognition is of different kinds for each area identified by said area identification means.

6. The image processing apparatus according to claim 1, wherein data that has been transformed by said transformation means is further encrypted, and resulting data is embedded as data for said digital watermark.

7. An image processing apparatus, comprising:
input means for inputting an original image in which document identification information that should exist in the original image is embedded as a digital watermark after it has been transformed based on a predetermined transformation algorithm which generates a unique transformation result from the information;
first extraction means for extracting document identification information from said original image;
second extraction means for extracting data that is embedded as a digital watermark in said original image;
transformation means for transforming said document identification information extracted by said first extraction means based on said predetermined transformation algorithm; and
detection means for detecting the reliability of document identification information extracted by said first extraction means, using data obtained by said transformation means and data obtained by said second extraction means.

8. The image processing apparatus according to claim 7, wherein said predetermined transformation algorithm is hash transformation.

9. The image processing apparatus according to claim 7, wherein said predetermined transformation algorithm is lossless compression.

10. The image processing apparatus according to any one of claims 7 to 9, further comprising informing means for informing the presence of tampering to said original image according to the result of said detection.

11. The image processing apparatus according to any one of claims 7 to 10, further comprising area identification means for identifying the area of document identification information within said original image,
wherein said first extraction means extracts character strings within an image as said document identification information by applying character recognition to the image within an area identified by said area identification means.

12. The image processing apparatus according to claim 11, wherein said character recognition is of different kinds for each area identified by said area identification means.

13. The image processing apparatus according to any one of claims 1 to 12, said document identification information comprises an ID, amount of money, an address, a name, and a birth date.

14. The image processing apparatus according to any one of claims 1 to 13, wherein said original image comprises a receipt, an account transfer request form, an insurance application form, and other negotiable instruments.

15. An image processing method for embedding a digital watermark into an original image, comprising;
an extraction step of extracting document identification information from said original image; and
a transformation step of transforming said document identification information extracted at said extraction step, based on a predetermined transformation algorithm that generates a unique transformation result from the information,
wherein data obtained at said transformation step is embedded as a digital watermark into said original image.

16. The image processing method according to claim 15, further comprising an area identifying step of identifying an area of said document identification information within said original image,
wherein at said extraction step, character strings within an image are extracted as said document identification information by applying character recognition to the image within an area identified at said area identifying step.

17. An image processing method, comprising:
an input step of inputting an original image in which document identification information that should exist in the original image is embedded as a digital watermark after it has been transformed based on a predetermined transformation algorithm which generates a unique transformation result from the information;
a first extraction step of extracting document identification information from said original image;
a second extraction step of extracting data which has been embedded as a digital watermark in said original image;
a transformation step of transforming said document identification information extracted at said first extraction step based on said predetermined transformation algorithm; and
a detection step of detecting the reliability of document identification information extracted at said first extraction step, using data obtained at said transformation step and data obtained at said second extraction step.

18. The image processing method according to claim 17, further comprising an informing step of informing the presence of tampering to said original image according to the result of said detection.

19. The image processing method according to claim 17 or 18, further comprising an area identifying step of identifying an area of document identification information within said original image,
wherein at said first extraction step, character strings within an image are extracted as said document identification information by applying character recognition to the image within an area identified at said area identifying step.

20. A program for causing a computer to function as the image processing apparatus according to any one of claims 1 to 14.

21. A program for causing a computer to perform the image processing method according to any one of claims 15 to 19.

22. A storage medium for storing the program according to claim 20 or 21.

23. A method of applying a security watermark to data representative of a document comprising forming a digital signature from a subset of the data representative of a selected portion of the document and embedding the signature in the data as a digital watermark.

24. A method as claimed in claim 23 wherein the signature is formed using a method of public key encryption.
